(19) Europäisches Patentamt / European Patent Office / Office européen des brevets

(11) **EP 4 274 380 A1**

(12) **EUROPEAN PATENT APPLICATION**
published in accordance with Art. 153(4) EPC

(43) Date of publication:
**08.11.2023  Bulletin 2023/45**

(21) Application number: **21915368.1**

(22) Date of filing: **01.02.2021**

(51) International Patent Classification (IPC):
*H05B 6/12* (2006.01)     *C01B 32/20* (2017.01)

(52) Cooperative Patent Classification (CPC):
**C01B 32/20; H05B 6/12**

(86) International application number:
**PCT/KR2021/001307**

(87) International publication number:
**WO 2022/145568 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020  KR 20200187889**

(71) Applicants:
• **LG Electronics Inc.
Yeongdeungpo-gu
Seoul 07336 (KR)**
• **Mokpo National Maritime University
Industry - Academic Cooperation Foundation
Muan-gun, Jeollanam-do 58554 (KR)**

(72) Inventors:
• **SHIN, Jaeyoung**
Seoul 08592 (KR)
• **KIM, Taeho**
Seoul 08592 (KR)
• **LEE, Yongsoo**
Seoul 08592 (KR)
• **KIM, Taehee**
Seoul 08592 (KR)
• **KIM, Juhyeong**
Seoul 08592 (KR)
• **SON, Seokkyun**
Mokpo-si, Jeollanam-do 58763 (KR)
• **KIM, Dohun**
Yongin-si, Gyeonggi-do 16971 (KR)

(74) Representative: **Vossius & Partner
Patentanwälte Rechtsanwälte mbB
Siebertstraße 3
81675 München (DE)**

(54) **GRAPHITE STRUCTURE HAVING HIGH MAGNETIC FLUX DENSITY DURING INDUCTION HEATING, AND ARRANGEMENT METHOD THEREFOR**

(57)    The graphite structure according to the present disclosure comprises multiple graphite blocks and one or more connection links connecting multiple graphite blocks to each other.

【Figure 6】

**Description**

## TECHNICAL FIELD

The present disclosure relates to a graphite structure having high magnetic flux density upon induction heating and an arrangement method thereof.

## BACKGROUND ART

Graphite is one of the carbon allotropes and has high electrical conductivity due to the plate-like arrangement of atoms. In general, graphite is light in weight and has high electrical conductivity greater than that of stainless steel, which is used as an object to be heated during induction heating, and thus has high energy efficiency.

However, the graphite has a brittle property, making it difficult to apply large-area graphite, and small-area graphite does not have a high magnetic flux density, making it difficult to select an object to be heated for induction heating.

In particular, since most of induction heating cookers are designed to stop the induction heating when it is determined that there is no object to be heated, it is difficult for graphite to become an object to be heated.

## DISCLOSURE OF THE INVENTION

## TECHNICAL PROBLEM

An object of the present disclosure is to provide a graphite structure having a high magnetic flux density during induction heating.

An object of the present disclosure is to provide an arrangement of a graphite structure having a high magnetic flux density during induction heating.

## TECHNICAL SOLUTION

A graphite structure according to the present disclosure may include a plurality of graphite blocks and one or more connection links connecting the plurality of graphite blocks to each other.

The at least one connection link may be a conductor.

An arrangement method of a graphite structure includes disposing a plurality of graphite blocks on a predetermined surface, and disposing at least one or more connection links connecting the plurality of graphite blocks to each other.

## ADVANTAGEOUS EFFECTS

According to the present disclosure, there may be the advantage in that the graphite block is capable of used as the main object to be heated or the auxiliary object to be heated for the induction heating.

According to the present disclosure, the magnetic flux similar to that of the large graphite block may be induced with the small graphite blocks, which is advantageous to the process.

According to the present disclosure, there may be the advantage in that the object to be heated having the flexibility is manufactured by arranging the small graphite blocks on the curved surface.

## BRIEF DESCRIPTION OF THE DRAWINGS

FIGS. 1 and 2 are views for explaining heating characteristics depending on an area of a graphite block according to an embodiment of the present disclosure.

FIGS. 3 and 4 are views illustrating a magnetic flux density of graphite according to an embodiment of the present disclosure.

FIG. 5 is a view of a graphite block according to an embodiment of the present disclosure.

FIG. 6 is a view of a graphite structure according to an embodiment of the present disclosure.

FIG. 7 is a view of a graphite structure according to an embodiment of the present disclosure.

FIG. 8 is a view for explaining heating characteristics depending on a distance between the graphite blocks according to an embodiment of the present disclosure.

## MODE FOR CARRYING OUT THE INVENTION

Hereinafter, embodiments according to the present disclosure will be described in detail with reference to the accompanying drawings. In the drawings, the same reference numerals are used to denote the same or similar elements.

Hereinafter, a graphite structure according to an embodiment of the present disclosure will be described.

Graphite is one of the carbon allotropes and has high electrical conductivity due to the plate-like arrangement of atoms. In general, graphite is light in weight and has high electrical conductivity greater than that of stainless steel, which is used as an object to be heated during induction heating, and thus has high energy efficiency.

However, the graphite has a brittle property, making it difficult to apply large-area graphite, and small-area graphite does not have a high magnetic flux density, making it difficult to select an object to be heated for induction heating.

In particular, since most of induction heating cookers are designed to stop the induction heating when it is determined that there is no object to be heated, it is difficult for graphite to become an object to be heated.

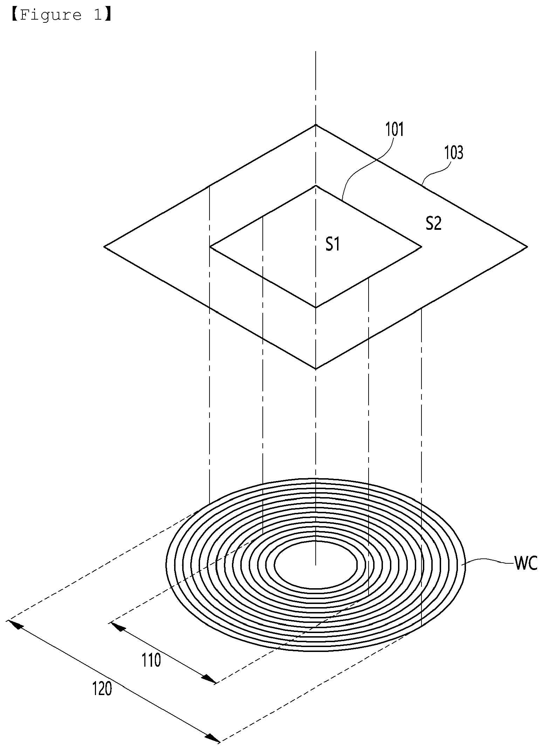

Next, a principle of heating graphite according to an embodiment of the present disclosure when the graphite has a cross-sectional area equal to or greater than a certain amount will be described with reference to FIGS. 1 to 4.

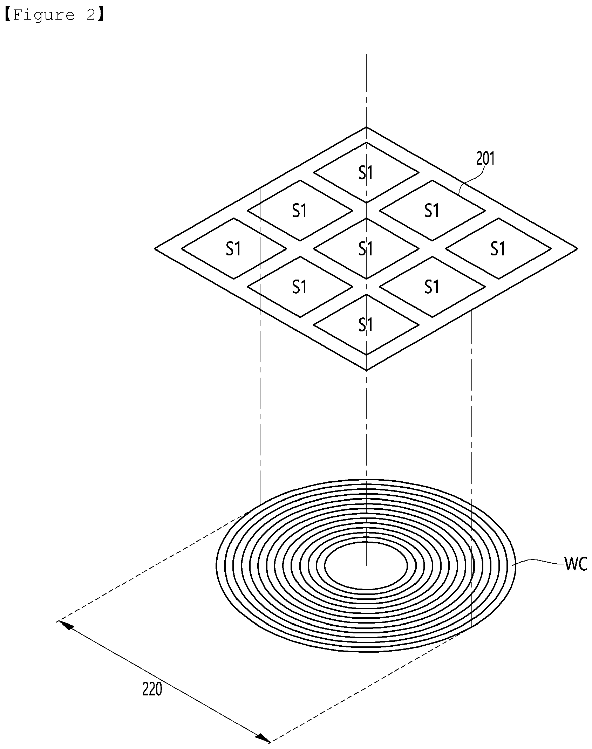

FIGS. 1 and 2 are views illustrating heating characteristics depending on an area of a graphite block according to an embodiment of the present disclosure.

First, referring to FIG. 1, an induction heating cooker may be designed to stop an operation of a working coil WC when it is determined that there is no container on the working coil WC.

As illustrated in FIG. 1, whether to stop a heating operation of the induction heating cooker may be determined according to a cross-sectional area of an graphite 101 or 103 placed on the working coil WC of the induction heating cooker. For example, when the graphite 101 having a first cross-sectional area S1 in which one side has a first length 110 is placed on the working coil WC, the induction heating cooker may determines that the object to be heated does not exist to stop the heating. In addition, when the graphite 103 having a second cross-sectional area S2 in which one side has a second length 120 greater than the first length 110 is placed on the working coil WC, the induction heating cooker may determines that the object to be heated exists so as not to stop the heating.

Here, if the area of the graphite is greater than the first cross-sectional area S1 and less than the second cross-sectional area S2, the induction heating cooker may determine that the object to be heated exists. That is, the induction heating cooker may determine that a container exists only when the graphite having a predetermined cross-sectional area or more is placed on the working coil WC and thus may not stop the heating. In addition, the predetermined cross-sectional area of the graphite described above may be proportional to a diameter of the working coil WC. That is, when the diameter of the working coil WC increases, the cross-sectional area of the graphite required to determine that the object to be heated exists may also increase.

Next, referring to FIG. 2, when a plurality of graphites 201, each of which has the first cross-sectional area S1, are placed on the working coil WC of the induction heating cooker having a diameter of a second length 220 that is equal to a second length 220 of FIG. 1, the induction heating cooker may stop the heating by determining that the object to be heated does not exist. That is, as illustrated in FIG. 2, although the sum of the cross-sectional areas of pieces of the graphite 201 exceeds the first cross-sectional area S1, the induction heating cooker may determines that there is no object to be heated and thus stop the heating.

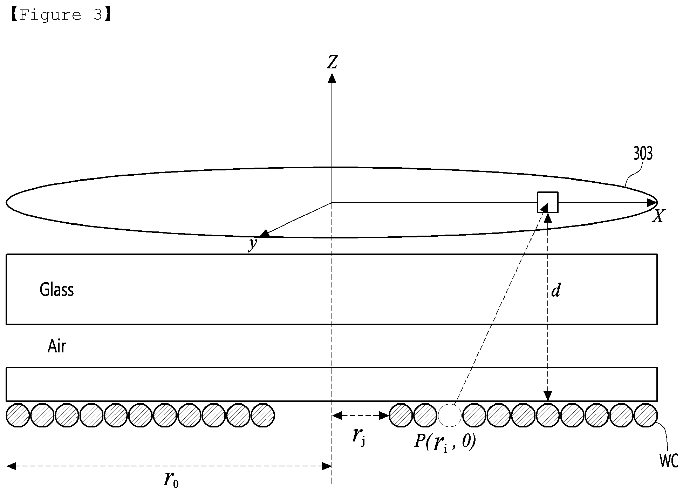

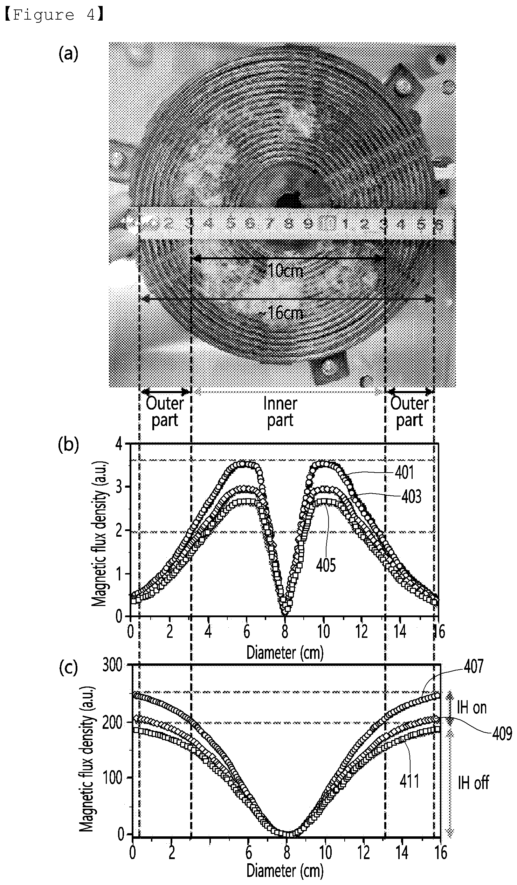

Next, FIGS. 3 and 4 are views illustrating a magnetic flux density of the graphite according to an embodiment of the present disclosure.

FIG. 3 illustrates a side view of the working coil and the graphite according to an embodiment of the present disclosure.

(a) of FIG. 4 is a view illustrating the working coil and a diameter of the working coil according to an embodiment of the present disclosure, (b) of FIG. 4 is a graph illustrating a magnetic flux density of a graphite depending on a distance from a central portion of the working coil according to an embodiment of the present disclosure, and (c) of FIG. 4 is a graph illustrating the total magnetic flux density of the graphite according to the distance from the central portion of the working coil according to an embodiment of the present disclosure.

First, a method for obtaining the total magnetic flux density of a graphite 303 spaced a vertical distance d from the working coil WC will be described through Equations with reference to FIG. 3.

Below, in [Equation 1] to [Equation 4], _ may mean permittivity of vacuum, and _ may mean permittivity of graphite.

B means a magnetic flux density, A means an operating frequency, _ means induced eddy current, J means a current density of a coil, I means primary current, and k means an integral constant, and J(kr) may mean a Bessel function of the first kind.

[Equation 1]

$$\nabla \times B = \mu_0 \mu_r (\, j\omega\sigma A - J)$$

[Equation 2]

$$A(r, z) = \mu_0 \mu_r I r \int_0^\infty e^{-kD} J_1(kr) J_1(k_i) k \times \frac{(K+K_1)e^{k_1 d} - (K-K_1)e^{-k_1 d}}{(K+K_1)e^{kd} - (K-K_1)^2 e^{-kd}} dk$$

[Equation 2] may be substituted into [Equation 1], [Equation 3] below may be derived.

[Equation 3]

$$B(r, z) = \nabla \times B = \left[ \sum_{i=1}^{n} A(r_{ie}, z_{ie}) \right]$$

[Equation 3] is an equation representing a magnetic flux density according to a distance on an x-axis of the graphite 303 covering the working coil WC. That is, [Equation 3] may mean the magnetic flux density at an arbitrary point of the graphite covering the working coil.

[Equation 4] below may be obtained by integrating [Equation 3] representing the magnetic flux density at any one point of the graphite.

[Equation 4]

$$\sum_{i=1}^{n} B(r, z) = \sum_{i=1}^{n} \nabla \times B$$

[Equation 4] is an equation representing a cumulative magnetic flux density from a central portion of the graphite 303 covering the working coil WC to a distance r on the x-axis.

Next, (b) of FIG. 4 is a graph illustrating the magnetic flux density according to the distance r on the x-axis of the graphite covering the working coil WC in [Equation 3] and a vertical distance d with the working coil WC, and (c) of FIG. 4 is a view illustrating the cumulative magnetic flux density from the central portion of the graphite covering the working coil WC to the distance r on the x-axis in [Equation 4] according to the vertical distance d with the working coil WC.

In (b) of FIG. 4, a first graph 401 is a graph showing a magnetic flux density according to the distance r on the x-axis of the graphite covering the working coil WC when the vertical distance d of the graphite to the working coil WC is a first distance, a second graph 403 is a graph showing a magnetic flux density according to the distance r on the x-axis of the graphite covering the working coil WC when the vertical distance d of the graphite to the working coil WC is a second distance greater than the first distance, and a third graph 405 is a graph showing a magnetic flux density according to the distance r on the x-axis of the graphite covering the working coil WC when the vertical distance d of the graphite to the working coil WC is a third distance greater than the second distance.

In (c) of FIG. 4, a fourth graph 407 is a graph showing a cumulative magnetic flux density according to the distance r on the x-axis of the graphite covering the working coil WC when the vertical distance d of the graphite to the working coil WC is a first distance, a fifth graph 409 is a graph showing a cumulative magnetic flux density according to the distance r on the x-axis of the graphite covering the working coil WC when the vertical distance d of the graphite to the working coil WC is a second distance greater than the first distance, and a sixth graph 411 is a graph showing a cumulative magnetic flux density according to the distance r on the x-axis of the graphite covering the working coil WC when the vertical distance d of the graphite to the working coil WC is a third distance greater than the second distance.

It is seen that the cumulative magnetic flux density of the graphite increases as the area covering the working coil WC increases, and increases as the vertical distance d from the working coil WC decreases.

Therefore, as the vertical distance d from the working coil WC increases, a required cross-sectional area of the graphite to be inducted into the heating target increases.

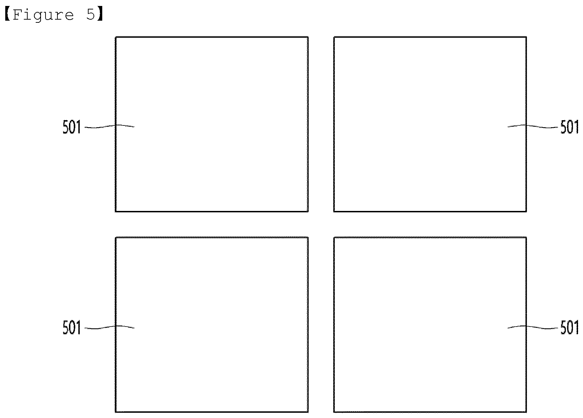

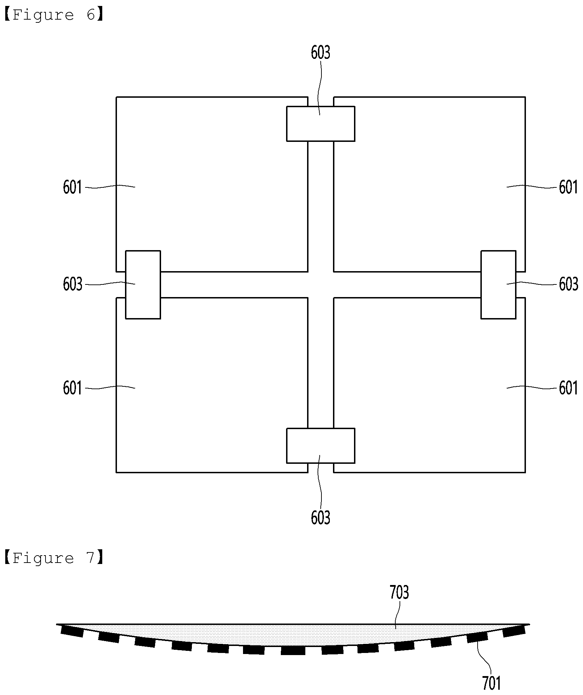

Then, referring to FIGS. 5 and 7, a graphite structure according to an embodiment of the present disclosure will be described.

FIG. 5 is a view of a graphite block according to an embodiment of the present disclosure.

FIGS. 6 and 7 are views of a graphite structure according to an embodiment of the present disclosure.

A graphite structure according to an embodiment of the present disclosure may include a plurality of graphite blocks 501, 601, and 701 and at least one or more connection links 603 and 703 connecting the plurality of graphite blocks 501, 601, and 701 to each other.

Each of the connection links 603 and 703 according to an embodiment of the present disclosure may be a conductor. For example, each of the connection links 603 and 703 of the present disclosure may be a metal and may be aluminum, copper, graphite, or the like.

Referring to FIG. 5, when the plurality of graphite blocks 501 are separated from each other without the connection link, each graphite block 501 may have a magnetic flux density of a value a during induction heating. On the other hand, referring to FIG. 6, when the plurality of graphite blocks 601 are connected to each other through the connection link 603, the graphite structure may have a magnetic flux density of a value 4a, which is the sum of all magnetic flux densities the during the induction heating.

At least one or more connection links 603 and 703 according to an embodiment of the present disclosure may be arranged so that there is no graphite blocks 501, 601, and 701 that are not connected to each other among the plurality of graphite blocks 501, 601, and 701. For example, the connection links 603 and 703 may be arranged to connect the adjacent graphite blocks 501, 601 and 701 to each other among the plurality of graphite blocks 501, 601 and 701.

That is, the graphite structure according to an embodiment of the present disclosure may include at least one or more connection links 603 and 703 that electrically connect the plurality of graphite blocks 501, 601, and 701 to each other.

In addition, all of the graphite blocks 501, 601, and 701 according to an embodiment of the present disclosure may have the same shape and size. According to an embodiment, each of the graphite blocks 501, 601, and 701 may have a rectangular parallelepiped shape or a flat plate shape. Alternatively, according to an embodiment, the graphite blocks 501, 601, and 701 may have different shapes and sizes.

When each of the graphite blocks 501, 601, and 701 according to an embodiment of the present disclosure have a rectangular parallelepiped shape, the connection links 603 and 703 may be disposed to connect the graphite blocks 501, 601, and 701 of which surfaces are adjacent to each other among the plurality of graphite blocks 501, 601, and 701 to each other. Since each of the connection links 603 and 703 has a size less than that of each of the graphite blocks 501, 601 and 701, flexibility may be greater. Thus, the graphite structure constituted by the plurality of small graphite blocks 501, 601, and 701 and the connection links 603 and 703 may have flexibility greater than that of a single large graphite block.

The plurality of graphite blocks 501, 601, and 701 according to an embodiment of the present disclosure may be disposed on a predetermined surface. The predetermined surface may mean a flat surface or may mean a curved surface.

When the graphite blocks 501, 601, and 701 of the present disclosure are arranged on a plane as illustrated in FIG. 5 or 6, the plurality of graphite blocks 501, 601, and 701 may be arranged in an NxM array. For example, when the graphite blocks are arranged in a 2x2 array, the graphite structure of the present disclosure may be constituted by 4 graphite blocks.

In addition, the graphite blocks 501, 601, and 701 according to an embodiment of the present disclosure may be disposed on the curved surface as illustrated in FIG. 7, and each of the connection links 603 and 703 itself connecting the graphite blocks 501, 601 and 701 to each other may be provided as a curved surface.

Here, the connection link 703 may be made of stainless, but this is only an example.

According to the present disclosure, there may be an advantage in that the graphite blocks 501, 601, and 701 are used as a main object to be heated or an auxiliary object to be heated for the induction heating.

In addition, according to the present disclosure, the magnetic flux similar to that of the large graphite block may be induced by the small graphite blocks 501, 601, and 701, which is advantageous to the process.

In addition, according to the present disclosure, there may be an advantage in that the flexible object to be heated is capable of being manufactured by disposing the small graphite blocks 501, 601, and 701 on the curved surface.

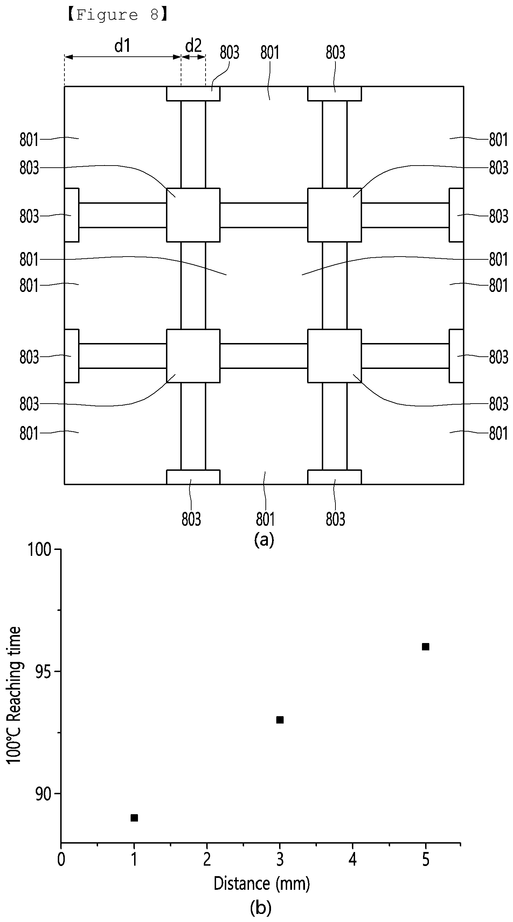

FIG. 8 is a view for explaining heating characteristics depending on a distance between the graphite blocks according to an embodiment of the present disclosure.

Referring to (a) of FIG. 8, the graphite structure includes a plurality of graphite blocks 801 and a connection link 803 connecting the plurality of graphite blocks 801 to each other.

According to an embodiment of the present disclosure, a size of one side d1 of each of the graphite block 801 may be 5 cm, and a distance d2 between the graphite blocks may be one of 1 mm, 3 mm, and 5 mm.

Referring to (b) of FIG. 8, when the distance d2 between the graphite blocks 801 is 1 mm, it takes about 89 seconds to reach a temperature of 100°C, when the distance d2 is 3 mm, it takes about 93 seconds to reach a temperature of 100°C, and when the distance d2 is 5 mm, it takes about 96 seconds to reach a temperature of 100°C.

That is, it is seen that heating efficiency of the graphite structure according to an embodiment of the present disclosure is deteriorated as the distance between the graphite blocks 801 increases.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present disclosure is to be considered illustrative, and not restrictive, and the technical spirit of the present disclosure is not limited to the foregoing embodiment.

Therefore, the scope of the present disclosure is defined not by the detailed description of the invention but by the appended claims, and all differences within the scope will be construed as being included in the present disclosure.

## Claims

1. A graphite structure comprising:

   a plurality graphite blocks; and
   at least one or more connection links configured to connect the plurality of graphite blocks to each other.

2. The graphite structure according to claim 1, wherein each of the at least one or more connection links is a conductor.

3. The graphite structure according to claim 2, wherein each of the at least one or more connection links is graphite.

4. The graphite structure according to claim 1, wherein the at least one or more connection links are disposed so that the graphite blocks that are not connected to each other among the plurality of graphite blocks are not provided.

5. The graphite structure according to claim 1, wherein the at least one or more connection links are disposed to connect the adjacent graphite blocks among the plurality of graphite blocks to each other.

6. The graphite structure according to claim 1, wherein the plurality of graphite blocks have the same shape and size.

7. The graphite structure according to claim 6, wherein each of the plurality of graphite blocks has a rectangular parallelepiped shape.

8. The graphite structure according to claim 7, wherein the at least one or more connection links are disposed to connect the graphite blocks having surfaces are adjacent to each other among the plurality of graphite blocks to each other.

9. The graphite structure according to claim 1, wherein the plurality of graphite blocks are disposed on a plane.

10. The graphite structure according to claim 9, wherein the plurality of graphite blocks are disposed in an NXM matrix.

11. The graphite structure according to claim 1, wherein the plurality of graphite blocks are disposed on a curved surface.

12. An arrangement method of a graphite structure, the arrangement method comprising:

    disposing a plurality of graphite blocks on a predetermined surface; and
    disposing at least one or more connection links connecting the plurality of graphite blocks to each other.

【Figure 1】

【Figure 2】

【Figure 3】

【Figure 4】

(a)

(b)

(c)

【Figure 5】

【Figure 6】

603

601    601

603    603

601    601

603

【Figure 7】

703

701

【Figure 8】

(a)

(b)

## INTERNATIONAL SEARCH REPORT

| International application No. |
|---|
| **PCT/KR2021/001307** |

**A.   CLASSIFICATION OF SUBJECT MATTER**

**H05B 6/12**(2006.01)i; **C01B 32/20**(2017.01)i

According to International Patent Classification (IPC) or to both national classification and IPC

**B.      FIELDS SEARCHED**

Minimum documentation searched (classification system followed by classification symbols)

H05B 6/12(2006.01); A47J 27/00(2006.01); A47J 27/088(2006.01); A47J 36/02(2006.01); A47J 36/04(2006.01); C01B 31/04(2006.01); C04B 35/52(2006.01); C04B 35/536(2006.01); C23C 14/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그라파이트 블록(graphite block), 연결 링크(connection link), 유도 가열(induction heating), 자속 밀도(magnetic flux density)

**C.      DOCUMENTS CONSIDERED TO BE RELEVANT**

| Category* | Citation of document, with indication, where appropriate, of the relevant passages | Relevant to claim No. |
|---|---|---|
| X | KR 10-2008-0031741 A (SGL CARBON AG) 10 April 2008 (2008-04-10)<br>See paragraphs [0037]-[0045]; and figure 1. | 1-12 |
| A | JP 2019-083882 A (TOYO TANSO K.K.) 06 June 2019 (2019-06-06)<br>See paragraphs [0017]-[0031]; and figures 1-2. | 1-12 |
| A | JP 09-075211 A (TOSHIBA CORP.) 25 March 1997 (1997-03-25)<br>See claims 1-3; and figure 1. | 1-12 |
| A | KR 10-0903430 B1 (JONG, Yong Man) 18 June 2009 (2009-06-18)<br>See claim 2; and figures 1-3. | 1-12 |
| A | JP 2012-218957 A (MITSUBISHI ELECTRIC CORP.) 12 November 2012 (2012-11-12)<br>See claim 5; and figure 2. | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 September 2021** | **24 September 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/001307**

| Patent document cited in search report | | | Publication date (day/month/year) | Patent family member(s) | | | Publication date (day/month/year) |
|---|---|---|---|---|---|---|---|
| KR | 10-2008-0031741 | A | 10 April 2008 | CN | 101193837 | A | 04 June 2008 |
| | | | | EP | 1746077 | A1 | 24 January 2007 |
| | | | | EP | 1893550 | A1 | 05 March 2008 |
| | | | | JP | 2009-505850 | A | 12 February 2009 |
| | | | | US | 2008-0149322 | A1 | 26 June 2008 |
| | | | | WO | 2006-136242 | A1 | 28 December 2006 |
| JP | 2019-083882 | A | 06 June 2019 | TW | 201922156 | A | 16 June 2019 |
| | | | | WO | 2019-088144 | A1 | 09 May 2019 |
| JP | 09-075211 | A | 25 March 1997 | None | | | |
| KR | 10-0903430 | B1 | 18 June 2009 | KR | 10-2009-0010823 | A | 30 January 2009 |
| JP | 2012-218957 | A | 12 November 2012 | JP | 4889814 | B1 | 07 March 2012 |

Form PCT/ISA/210 (patent family annex) (July 2019)